# EUROPÄISCHE PATENTANMELDUNG

(11) **EP 4 306 477 A1**
(43) Veröffentlichungstag der Anmeldung: **17.01.2024**
(21) Anmeldenummer: 23190451.7
(22) Anmeldetag: 03.05.2021
(51) Int. Cl.: B66F 9/075, B66F 17/00

(54) **FLURFÖRDERZEUG**

(30) Priorität: 04.05.2020 DE 102020205606
(62) Teilanmeldung aus: 21171844.0
(71) Anmelder: Jungheinrich Aktiengesellschaft, 22047 Hamburg (DE)
(72) Erfinder: SCHÖTTKE, Carsten, 85368 Moosburg (DE); BIBERNELL, Hubert, 84034 Landshut (DE); SCHÖNAUER, Michael, 85368 Moosburg (DE)
(74) Vertreter: Weickmann & Weickmann PartmbB

(57) **Zusammenfassung**

Die vorliegende Erfindung betrifft ein Flurförderzeug, umfassend einen Fahrzeugkörper, ein Hubgerüst, wenigstens ein Lastrad, wenigstens ein weiteres Rad, beispielsweise ein gelenktes Antriebsrad, wenigstens einen dem wenigstens einen Lastrad zugeordneten Aktor (13), welcher dazu eingerichtet und angeordnet ist, eine relative Position des Lastrads bezüglich des Fahrzeugkörpers anzupassen, wenigstens eine Erfassungseinheit (110), welche dazu eingerichtet ist, einen momentanen Betriebsparameter des Flurförderzeugs zu erfassen und entsprechende Daten auszugeben, und eine Steuereinheit (112) mit einer zugeordneten Speichereinheit (114), welche betriebsmäßig mit dem wenigstens einen Aktor (13) und der wenigstens einen Erfassungseinheit (110) gekoppelt und dazu eingerichtet ist einen Soll-Zustand (S) des Flurförderzeugs zu definieren, Daten von der Erfassungseinheit (110) zu erhalten, anhand der erfassten Betriebsparameter des Flurförderzeugs einen Ist-Zustand (Z) des Flurförderzeugs zu bestimmen, Auswirkungen möglicher Anpassungen der relativen Position des Lastrads bezüglich des Fahrzeugkörpers auf den Ist-Zustand (Z) des Flurförderzeugs zu berechnen und den wenigstens einen Aktor (13) derart anzuweisen, dass durch eine Anpassung der relativen Position des Lastrads bezüglich des Fahrzeugkörpers eine Annäherung des Ist-Zustands (Z) des Flurförderzeugs an den Soll-Zustand (S) bewirkt wird, wobei das wenigstens eine Lastrad einem schwenkbar an dem Fahrzeugkörper angelenkten Rahmenelement zugeordnet ist..

## Beschreibung

Die vorliegende Erfindung betrifft Verbesserungen an Flurförderzeugen, insbesondere an Schmalgang-Staplern.

Ein typisches Problem, das bei Betrieb von Flurförderzeugen auftritt und die damit erreichbaren Umschlagraten begrenzt, sind Schwingungen des Hubgerüsts sowie Verformungen des Hubgerüsts bei einem Lastwechsel quer zur Fahrtrichtung sowie auch längs zur Fahrtrichtung. Insbesondere bei Schmalgang-Staplern, die Waren häufig in sehr große Höhen heben, wirken sich derartige Schwingungen aufgrund der geometrischen Verhältnisse besonders nachteilhaft aus. Weitere Aspekte, die in diesem Zusammenhang eine Rolle spielen können sind ein Niveauausgleich im Stand des Fahrzeugs und eine Kompensation von Verformungen im Fahrzeug durch das Ausschieben von Lasten. Demzufolge muss in der Praxis zum Erreichen einer maximalen Fahrgeschwindigkeit ohne zu große Querschwingungen des Hubgerüsts für eine perfekte Ebenheit des Untergrunds gesorgt werden, auf welchem sich das Flurförderzeug mit seinen Rädern fortbewegt. Dies verursacht jedoch hohe Kosten und erfordert eine regelmäßige Überprüfung und Wartung dieses Untergrunds.

Zur fahrzeugseitigen Reduktion der angesprochenen Schwingungen sind verschiedene Systeme vorgeschlagen worden, beispielsweise ist aus der EP 2 814 677 A1 bekannt, Oberflächeneigenschaften des Fahruntergrunds zu erfassen und auf Grundlage dieser Erfassung den erwarteten kinematischen Effekten auf das Flurförderzeug durch geeignete Maßnahmen entgegenzuwirken. Hierbei kann beispielsweise an ein aktives Fahrwerk gedacht werden, bei dem Einfluss auf die Räder des Flurförderzeugs genommen wird.

Eine spezielle Ausführungsform eines derartigen aktiven Fahrwerks ist wiederum beispielsweise aus der EP 3 309 111 B1 bekannt, in welcher vorgeschlagen wird, ein Lastrad eines Flurförderzeugs drehbar an mindestens einer Exzenterscheibe anzuordnen, die an dem Fahrzeugkörper um eine Drehachse gelagert ist, die wiederum von der Raddrehachse versetzt angeordnet ist.

Es zeigt sich jedoch in der Praxis, dass sowohl die angesprochene Erfassung des Fahruntergrunds als auch die Lagerung von Lasträdern mittels Exzenterscheiben keine optimalen Lösungen für die Reduktion von Hubgerüstschwingungen in Flurförderzeugen darstellen.

Es ist demzufolge die Aufgabe der vorliegenden Erfindung, ein Flurförderzeug bereitzustellen, welches schwingungsreduzierende Maßnahmen aufweist, sodass es auch bei schlechteren Fahruntergründen eine hohe Geschwindigkeit erreichen kann, ohne dass hierdurch die Präzision der durch das Flurförderzeug zu vollführenden Aufgaben leiden würde.

Hierzu umfasst das erfindungsgemäße Flurförderzeug einen Fahrzeugkörper, ein Hubgerüst, welches sich von dem Fahrzeugkörper im Wesentlichen vertikal erstreckt, wenigstens ein Lastrad, welches auf einem Untergrund aufsteht, wenigstens ein weiteres Rad, welches ebenfalls auf einem Untergrund aufsteht, beispielsweise ein gelenktes Antriebsrad, welches dazu eingerichtet ist, das Flurförderzeug in einer gelenkten Weise zu einer Bewegung auf dem Untergrund anzutreiben, , wenigstens einen dem wenigstens einen Lastrad zugeordneten Aktor, welcher dazu eingerichtet und angeordnet ist, eine relative Position des Lastrads bezüglich des Fahrzeugkörpers anzupassen, wenigstens eine Erfassungseinheit, welche dazu eingerichtet ist, einen momentanen Betriebsparameter des Flurförderzeugs zu erfassen und entsprechende Daten auszugeben, und eine Steuereinheit mit einer zugeordneten Speichereinheit, welche betriebsmäßig mit dem wenigstens einen Aktor und der wenigstens einen Erfassungseinheit gekoppelt ist und dazu eingerichtet ist, einen Sollzustand des Flurförderzeugs zu definieren, Daten von der Erfassungseinheit zu erhalten, anhand der erfassten Betriebsparameter des Flurförderzeugs einen Ist-Zustand des Flurförderzeugs zu bestimmen, Auswirkungen möglicher Anpassungen der relativen Position des Lastrads bezüglich des Fahrzeugkörpers auf den Ist-Zustand des Flurförderzeugs zu berechnen und den wenigstens einen Aktor derart anzuweisen, dass durch ein Anpassen der relativen Position des Lastrads bezüglich des Fahrzeugkörpers eine Annäherung des Ist-Zustands des Flurförderzeugs an den Soll-Zustand bewirkt wird.

Neben dem angesprochenen Beispiel, in welchem das wenigstens eine weitere Rad als gelenktes Antriebsrad ausgebildet ist, sind auch andere Kombinationen von Antrieb und Lenkung denkbar, beispielsweise könnte das wenigstens eine Lastrad angetrieben sein, insbesondere als Teil einer angetriebenen Lastachse, so dass das weitere Rad dann ein gelenktes Rad ohne Antrieb sein könnte.

Hierbei kann die Erfassungseinheit insbesondere dazu eingerichtet sein, wenigstens Eines zu erfassen aus einer Neigung des Fahrzeugkörpers gegenüber dem Untergrund und/oder der Horizontalen und einer Beschleunigung und/oder einer Geschwindigkeit und/oder einer Neigung wenigstens einer Komponente des Flurförderzeugs und/oder einer von dem Flurförderzeug getragenen Last gegenüber dem Untergrund und/oder wenigstens einer anderen Komponente des Flurförderzeugs, wobei die zu erfassende Beschleunigung insbesondere quer zu einer Fahrtrichtung des Flurförderzeugs gerichtet sein kann.

Demnach wird erfindungsgemäß zunächst auf Betriebsparameter des Flurförderzeugs selbst zurückgegriffen, beispielsweise indem ein Neigungssensor das Niveau des Fahrzeugkörpers absolut zur Horizontalen oder bezogen auf ein vorab definiertes Niveau bestimmt, beispielsweise auf einen um einen vordefinierten Winkel gegenüber der Horizontalen geneigten Untergrund. In einem derartigen Fall kann die Ansteuerung des Aktors zu einer Ausrichtung des Fahrzeugkörpers und damit des Hubgerüsts gegenüber der Horizontalen verwendet werden.

In einem anderen Beispiel können als Erfassungseinheiten mehrere Sensoren eingesetzt werden, beispielsweise ein erster Sensor auf der weiter unten noch ausführlicher angesprochenen Lastradachse und ein zweiter Sensor an einem von dieser Lastradachse entkoppelten Hinterteil des Fahrzeugkörpers. Indem nun die relative Lage der beiden Sensoren zueinander ermittelt wird, kann eine benötigte Aktorreaktion durch die Steuereinheit berechnet werden, mittels welcher die beiden angesprochenen Fahrzeugkomponenten wieder in eine optimale Ausrichtung zueinander gelangen können.

In einer weiteren Variante könnte auch ein erster Sensor einem ersten beweglich angeordneten Lastrad zugeordnet sein, ein zweiter Sensor einem zweiten beweglich angeordneten Lastrad und ein dritter Sensor an dem von den Rädern entkoppelten Fahrzeugkörper. Diese Variante bietet sich für Ausführungsformen des erfindungsgemäßen Flurförderzeugs an, in denen auf eine starre Lastradachse verzichtet wird.

Weiterhin kann der momentanen Betriebsparameter einen Bewegungszustand, wie beispielsweise eine Geschwindigkeit oder eine Beschleunigung einer Fahrzeugkomponente oder eine Position des Fahrzeugs, umfassen. Als Beispiel hierfür kann an einen Beschleunigungssensor gedacht werden, welcher einen Beschleunigungsvektor im Wesentlichen quer zur Fahrtrichtung des Flurförderzeugs, beispielsweise am Hubgerüst oder an einem angehobenen Lastteil, erfasst. Hieraus kann dann durch die Steuereinheit eine Aktorreaktion bestimmt werden, welche diesem Beschleunigungsvektor entgegenwirkt bzw. wenigstens dessen Betrag minimiert.

In diesem Zusammenhang könnte durch eine kontinuierliche Integration von derartigen Beschleunigungsvektoren ab einem gewissen Startzustand ein Geschwindigkeitsvektor und weiter eine relative Positionsangabe ermittelt werden. Die beiden eben angesprochenen Beispiele können auch in Kombination miteinander oder komplementär zueinander in einem einzelnen erfindungsgemäßen Flurförderzeug zum Einsatz kommen.

Selbstverständlich kann zudem wenigstens eine weitere Erfassungseinheit an dem Flurförderzeug vorgesehen sein, welche dazu eingerichtet ist, wenigstens eine Eigenschaft der Umgebung des Flurförderzeugs zu erfassen und entsprechende Daten an die Steuereinheit auszugeben. Die Erfassung der Umgebung schließt hierbei ein Erfassen des Fahruntergrunds ein, ist jedoch nicht hierauf beschränkt, sondern es können auch andere Wegmarken oder Objekte in der Umgebung des Fahrzeugs erfasst werden. Mögliche Ausführungsformen für derartige Erfassungseinheiten umfassen Laser-, Ultraschall- und Radar-Sensoren, welche beispielsweise Bereiche vor oder neben dem wenigstens einen Lastrad abtasten. Hierdurch können Projektionen von erwarteten Ist-Zuständen des Flurförderzeugs erzeugt werden, sodass die Aktorik des erfindungsgemäßen Flurförderzeugs vorhergesagten Abweichungen proaktiv entgegenwirken kann. Insbesondere können 2D- und/oder 3D-Erfassungseinheiten zum Einsatz kommen.

Des Weiteren kann die oder wenigstens eine der Erfassungseinheiten dem oder wenigstens einem der Lasträder zugeordnet sein, sodass die Aktorwirkung gegebenenfalls unmittelbar an der Stelle eintritt, an welcher der jeweilige Betriebsparameter und/oder die Eigenschaft der Umgebung erfasst worden ist.

Alternativ oder zusätzlich kann die oder wenigstens eine der Erfassungseinheiten dem Fahrzeugkörper, dem Hubgerüst und/oder einer mit dem Fahrzeugkörper oder dem Hubgerüst verbundenen Komponente des Flurförderzeugs zugeordnet sein. Beispiele hierfür umfassen die oben bereits angesprochenen Beschleunigungssensoren, die dem Hubgerüst oder einer an diesem verfahrbaren Komponente sowie dem Fahrzeugkörper zugeordnet sein können.

Weiterhin kann in der Speichereinheit der Steuereinheit wenigstens ein räumliches Kennfeld hinterlegt sein, wobei in einer derartigen Ausführungsform die Steuereinheit ferner dazu eingerichtet ist, anhand momentaner Bewegungsparameter des Flurförderzeugs und des wenigstens einen Kennfelds eine bevorstehende Änderung des Ist-Zustands des Flurförderzeugs zu bestimmen. Indem auf diese Weise eine Topologie- oder Anregungsprofilkarte eines zu befahrenden Bereichs eines Untergrunds für die Steuereinheit zur Verfügung gestellt wird, kann die Aktorik des erfindungsgemäßen Flurförderzeugs entsprechend in einer geeigneten Weise von der Steuereinheit angesteuert werden. Als Schlüsselparameter für das Kennfeld können beispielsweise Wertevektoren aus aktueller Position, aktueller Geschwindigkeit und aktueller Fahrtrichtung verwendet werden, aus welchen eine voraussichtliche Position für einen späteren Zeitpunkt gemeinsam mit einer erforderlichen Aktorstellung zu diesem Zeitpunkt zur Nivellierung des Fahrzeugs oder zum Entgegenwirken einer Schwingung abgeleitet werden kann.

Weiterhin kann das erfindungsgemäße Flurförderzeug wenigstens ein Empfangsgerät umfassen, welches dazu eingerichtet ist, von einer externen Einrichtung Daten zu empfangen, welche Informationen über die Position und/oder die Umgebung des Flurförderzeugs repräsentieren. In ähnlicher Weise wie die eben beschriebenen Kennfelder können auch die von der externen Einrichtung übermittelten Daten lokale Topologie- oder Anregungsinformationen enthalten. Hierbei kann neben der Übertragung von entsprechenden Daten mittels bekannter drahtloser Datenübertragungsstandards auch an entlang definierter Fahrspuren oder an geeigneten Stellen in einem frei befahrbaren Bereich positionierte Barcodes oder QR-Codes mit lokalen Topologie-Informationen gedacht werden. In ähnlicher Weise können entlang der Fahrspur oder an geeigneten Positionen Sender, beispielsweise RFID-Tags, platziert sein, die an geeignete Empfangsgeräte am erfindungsgemäßen Flurförderzeug Topologie-Informationen übertragen können.

Gemäß einer ersten erfindungsgemäßen Alternative kann das wenigstens eine Lastrad einem schwenkbar an dem Fahrzeugkörper angelenkten Rahmenelement zugeordnet sein, sodass im Wesentlichen eine Zweiteilung des Fahrzeugkörpers vorliegt. Hierbei kann an einen Vorbau in der Art eines Knicklenkers gedacht werden, wobei das wenigstens eine lasttragende Rahmenteil beispielsweise auf Höhe einer Rahmenvorderwand drehbar mit dem anderen Teil des Fahrzeugkörpers verbunden sein kann, wobei diesem anderen Teil das Hubgerüsts starr zugeordnet ist. Hierbei kann die Verbindungsstelle zwischen den beiden Teilen des Fahrzeugkörpers in ähnlicher Weise wie oben im Zusammenhang mit der Aufhängung der Lastradachse beschrieben ausgebildet sein und auch die entsprechenden Aktoren und ggf. vorgesehenen Dämpfungselemente können von den oben beschriebenen Typen sein.

Gemäß einer zweiten erfindungsgemäßen Alternative kann das oder wenigstens eines der und vorzugsweise sämtliche der Lasträder einzeln an dem Fahrzeugrahmen in einer durch wenigstens einen Aktor in vertikaler Richtung linear verlagerbaren Weise angeordnet sein, wobei ggf. ferner ein Dämpfungselement zum Dämpfen der Linearbewegung vorgesehen sein kann. In diesem Zusammenhang sei festgehalten, dass die Bewegung des wenigstens einen Lastrads nicht streng vertikal verlaufen muss, sondern durchaus auch eine horizontale Komponente enthalten kann, d. h. schräg liegen kann. Hierbei können beispielsweise das entsprechende Lastrad und eine Flanschplatte eine Einheit bilden, welche in der vertikalen Richtung verlagerbar mittels einer Linearführung am Grundrahmen gelagert ist.

Zum Antreiben dieser Linearbewegung kann erneut an zahlreiche an sich bekannte Typen von Aktoren gedacht werden, beispielsweise Hydraulikzylinder, Hubmagnete, Gewindespindeln, Linearmotoren, Zahnstangen, Piezoelemente, etc. Diese können erneut durch ein Dämpfungselement komplementiert werden. In einer Variante der eben beschriebenen Ausführungsform können auch zwei parallel angeordnete Aktoren vorgesehen werden, wodurch auf eine Linearführung des entsprechenden Lastrads verzichtet werden kann.

Um Bauraum im Bereich der Anbringung des wenigstens einen Lastrads an dem Fahrzeugkörper einsparen zu können, kann der wenigstens eine Aktor und ggf. das wenigstens eine Dämpfungselement wenigstens abschnittsweise innerhalb der Kontur des Lastrads angeordnet sein. In einer derartigen Ausführungsform kann beispielsweise das Radlager weit nach außen gezogen sein und eine Verbindung zwischen einem Radkörper und einem Innenring bilden. Dieser Innenring bildet dementsprechend eine Basis für den wenigstens einen Aktor und eine Linearführung. Mögliche Ausführungsformen in derartigen Varianten umfassen paarweise angeordnete hydraulische Hubsäulen zum Einschränken der Freiheitsgrade oder auch Tangentialkeile mit linearen Antriebseinheiten wie beispielsweise Piezoelementen, Hubmagneten oder Hubzylindern. Da in solchen Ausführungsformen die aufzunehmenden Kräfte hauptsächlich auf die vertikale Radlast beschränkt sind und die auftretenden Momente nur sehr kurze Hebelarme aufweisen, kann neben der angesprochenen kompakten Bauweise auch eine optimale Kraft- und Momentaufnahme erzielt werden.

In derartigen Ausführungsformen kann insbesondere in einer Radfelge des Lastrads eine kreisrunde Linearführung vorgesehen sein, mit welcher ein Führungswagen verbunden ist, wobei der wenigstens eine Aktor und ggf. das wenigstens eine Dämpfungselement zwischen dem Fahrzeugkörper und dem Führungswagen angeordnet sind.

Alternativ könnte ebenfalls eine kreisrunde Linearführung vorgesehen sein, mit welcher ein Führungswagen verbunden ist, welcher wiederum einem Hebelelement zugeordnet ist, wobei das Hebelelement andererseits derart schwenkbar an dem Fahrzeugkörper gelagert ist, dass seine Schwenkachse und die Drehachse des Lastrads nicht zusammenfallen, wobei der wenigstens eine Aktor dazu eingerichtet ist, eine Schwenkbewegung des Hebelelements zu bewirken. Auch in diesen beiden Varianten können die weiter oben bereits angesprochenen Ausführungsformen von Aktoren sowie Dämpfungselementen vorgesehen sein.

Weitere Merkmale und Vorteile der vorliegenden Erfindung werden aus der nachfolgenden Beschreibung von Ausführungsformen davon deutlich, wenn diese gemeinsam mit den beiliegenden Figuren betrachtet wird. Diese zeigen im Einzelnen:
- Figuren 1A - 1 D: schematische Querschnittsansichten von Vergleichsbeispielen von Flurförderzeugen mit unterschiedlichen Varianten von Lastachsen;
- Figur 2: eine isometrische Ansicht der Variante aus Figur 1C;
- Figur 3: eine schematische Ansicht einer weiteren Variante einer Lastachse in einem erfindungsgemäßen Flurförderzeug;
- Figuren 4A - 4E: schematische Querschnitte durch weitere Ausführungsformen von erfindungsgemäßen Flurförderzeugen mit einzeln aufgehängten Lasträdern sowie Ausführungsformen derartiger Lasträder; und
- Figur 5: eine schematische Darstellung der funktionellen Komponenten eines erfindungsgemäßen Flurförderzeugs.

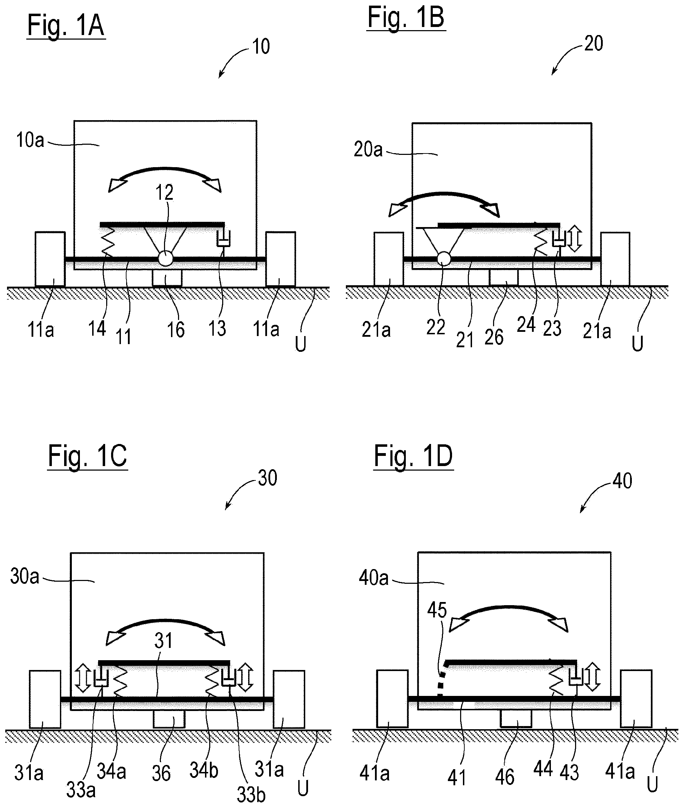

Die Figuren 1A bis 1D zeigen zunächst schematische Querschnittsansichten durch Varianten von Vergleichsbeispielen von Flurförderzeugen im Bereich ihrer jeweiligen Lastradachsen, welche nicht von der vorliegenden Erfindung umfasst sind. Im Folgenden sind jeweils gleiche oder ähnliche Komponenten der einzelnen Fahrzeuge mit gleichen Bezugszeichen, jeweils erhöht um ein Vielfaches von 10, bezeichnet, und es wird aus Gründen der Lesbarkeit teilweise auf eine detaillierte Beschreibung davon verzichtet.

Hierbei zeigt Figur 1A zunächst ein erstes Beispiel eines Flurförderzeugs 10 mit einem Fahrzeugkörper 10a und einer Lastradachse 11, welche an ihren beiden Seiten jeweilige Lasträder 11a trägt, mit welchen das Flurförderzeug 10 auf einem Untergrund U aufsteht. Außerhalb der Schnittebene ist ferner ein einzelnes gelenktes und angetriebenes Rad 16 angedeutet, welches ebenfalls auf dem Untergrund U aufsteht und für den Antrieb und die Lenkung des Fahrzeugs 10 verantwortlich ist. In anderen Varianten könnte die Lastradachse 11 auch angetrieben sein und das weitere Rad 16 lediglich gelenkt.

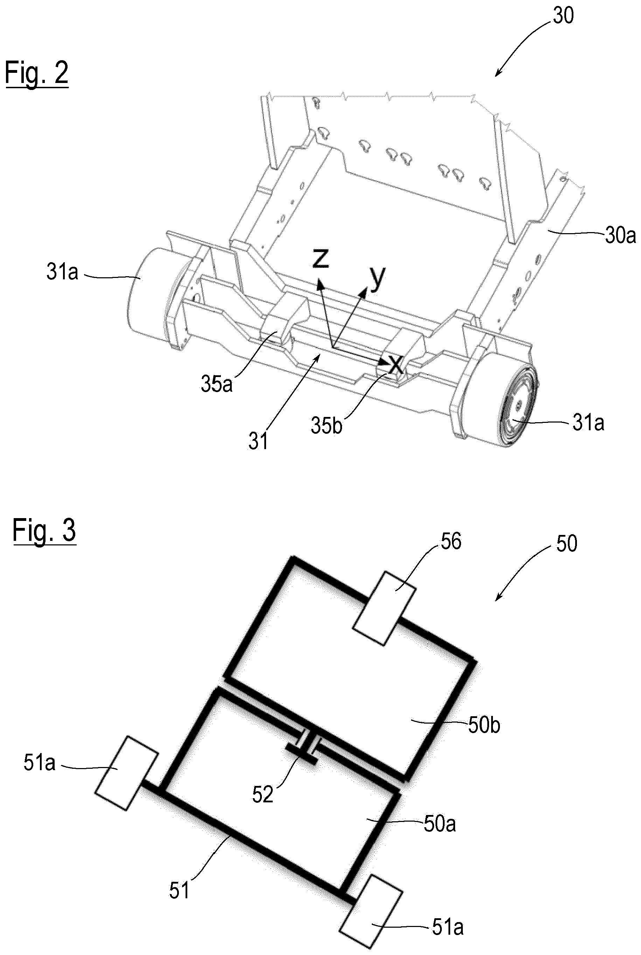

Die Lastradachse 11 ist um eine in Breitenrichtung des Flurförderzeugs 10 mittig angeordnete Schwenkachse 12 schwenkbar an dem Fahrzeugkörper 10a des Fahrzeugs 10 aufgehängt, wobei die Schwenkachse 12 in Fahrzeuglängsrichtung (y) verläuft, so dass die Schwenkbewegung der Lastradachse 11 in der Ebene verläuft, die durch die Fahrzeugbreitenrichtung (x) und die Fahrzeughöhenrichtung (z) aufgespannt wird. Die entsprechenden Richtungen und Achsen werden weiter unten anhand Figur 2 noch einmal illustriert werden, wobei in Figur 1A zudem durch einen Doppelpfeil die Schwenkbewegung des Fahrzeugkörpers 10a gegenüber dem Untergrund U bei einer Längenänderung eines Aktors 13 angedeutet ist.

Seitlich in einer ersten Richtung gegenüber der Schwenkachse 12 versetzt ist dieser längenveränderliche Aktor 13 zwischen dem Fahrzeugkörper 10a und der Lastradachse 11 vorgesehen, mittels welchem eine Schwenkbewegung zwischen der Lastradachse 11 und dem Fahrzeugkörper 10a bewirkt werden kann. Auf der in der Fahrzeugbreitenrichtung anderen Seite der Schwenkachse 12 liegt dem Aktor 13 ein Dämpfungselement 14 gegenüber, welches die von dem Aktor 13 bewirkten oder während des vorgesehenen Betriebs des Flurförderzeugs 10 auftretenden Schwenkbewegungen und Vibrationen der Lastradachse 11 dämpft.

Als mögliche Beispiele für derartige längenveränderliche Aktoren 13 kann an Hydraulikzylinder, Hubmagnete, Gewindespindeln, Linearmotoren, Zahnstangen, Piezoelemente, etc. gedacht werden, welche kontrolliert ansteuerbar sind und deren typischer Hub in vertikaler Richtung etwa ±3 mm betragen kann. Als Dämpfungselement 14 kann hingegen eine mechanische Feder oder ein hydraulischer Dämpfer zum Einsatz kommen, wobei im Fall einer Feder diese derart ausgelegt sein kann, dass im entsprechenden Aktor 13 stets ein Druck ansteht.

In Figur 1B ist eine zweite Variante eines Flurförderzeugs gezeigt und mit dem Bezugszeichen 20 bezeichnet. Im Gegensatz zu der Variante aus Figur 1A befindet sich in der Variante aus Figur 1B die Schwenkachse 22 der Lastradachse 21 außerhalb der Mitte der Breitenrichtung des Flurförderzeugs 20 und der Aktor 23 und das Dämpfungselement 24 sind beide auf derselben Seite der Schwenkachse 22 in Fahrzeugbreitenrichtung angeordnet.

Die dritte Variante eines Flurförderzeugs aus Figur 1C zeigt wiederum ein Flurförderzeug 30, in welchem auf eine Schwenkachse zur Aufhängung der Lastradachse 31 verzichtet worden ist, da diese stattdessen durch jeweilige Paare 33a und 33b von Aktoren sowie 34a und 34b von Dämpfungselementen jeweils beabstandet voneinander in Fahrzeugbreitenrichtung aufgehängt ist. Diese Ausführungsvariante ist in Figur 2 in einer isometrischen Ansicht erneut dargestellt, wobei dort der Fahrzeugkörper 30a und die Räder 31a deutlicher zu erkennen sind und die Fahrzeugbreitenrichtung mit x, die Fahrzeuglängsrichtung mit y und die Fahrzeughöhenrichtung mit z gekennzeichnet sind. Hierbei sind jeweilige Paare aus einem der Aktoren 33a, 33b und einem der Dämpfungselemente 34a, 34b als Funktionseinheiten in dafür vorgesehenen Gehäusen 35a und 35b aufgenommen, es sei in diesem Zusammenhang jedoch auch noch darauf hingewiesen, dass je nach Wahl der Aktoren 33a und 33b in einer solchen Ausführungsvariante auf Dämpfungselemente 34a, 34b vollständig verzichtet werden könnte.

Figur 1D zeigt ein viertes Beispiel eines Flurförderzeugs 40, in welchem zur Aufhängung der Lastradachse 41 anstelle einer Schwenkachse ein elastisches Element 45 vorgesehen ist, welches beispielsweise durch einen Torsionsstab gebildet sein kann. Dieser Torsionsstab 45 ist in der in Figur 1D gezeigten Ausführungsvariante analog zu der Schwenkachse 22 aus Figur 1B in Fahrzeugbreitenrichtung versetzt gegenüber der Mitte angeordnet und der Aktor 43 und das Dämpfungselement 44 befinden sich auf derselben Seite davon.

Figur 3 zeigt nun in einer schematischen Draufsicht eine erste Ausführungsvariante eines erfindungsgemäßen Flurförderzeugs 50 mit einem zweiteiligen Fahrzeugrahmen, welcher in der Art eines Knicklenkers ausgebildet ist und einen ersten Rahmenteil 50a und einen zweiten Rahmenteil 50b umfasst. Hierbei ist die Lastradachse 51 dem ersten Rahmenteil 50a zugeordnet, während der zweite Rahmenteil 50b beispielsweise das nicht dargestellte Hubgerüst tragen kann. Ebenfalls ist dem zweiten Rahmenteil 50b ein gelenktes und angetriebenes weiteres Rad 56 zugeordnet. Die schwenkbare Verbindung der beiden Rahmenteile 50a und 50b kann in analoger Weise zu den Ausführungsformen aus den Figuren 1A und 1B mittels einer Schwenkachse 52 erfolgen, welche in Fahrzeuglängsrichtung (y-Richtung) des Flurförderzeugs 50 orientiert ist.

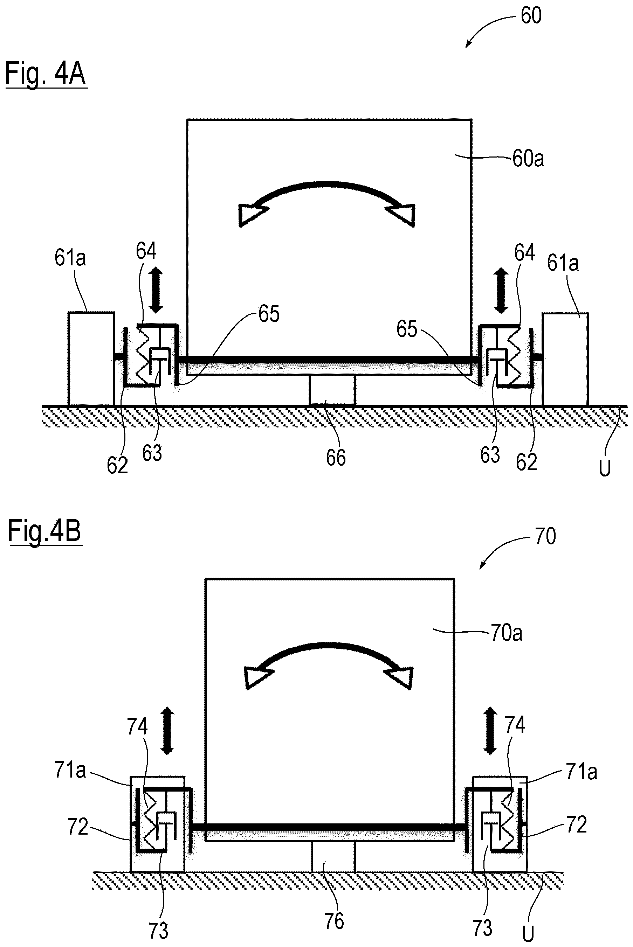

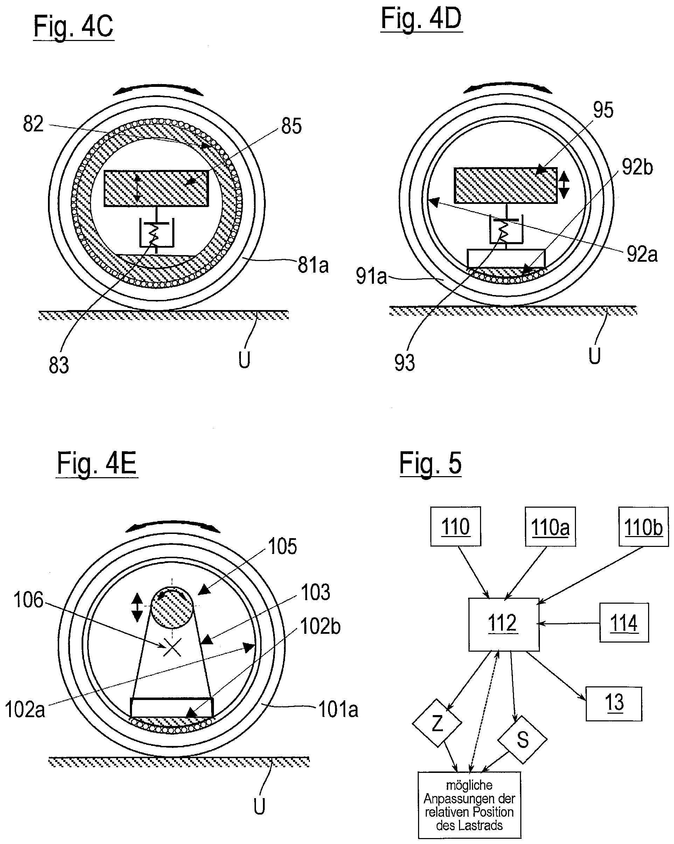

Die Figuren 4A und 4B zeigen nun zwei weitere Ausführungsformen von erfindungsgemäßen Flurförderzeugen in ähnlichen Ansichten wie die Figuren 1A bis 1D, wobei jedoch die entsprechenden Räder der Flurförderzeuge nicht mittels einer gemeinsamen Lastradachse getragen, sondern jeweils einzeln aufgehängt sind. Beispiele für entsprechende Einzelradaufhängungen sind dann in den Figuren 4C bis 4E noch einmal dargestellt.

Die Figur 4A zeigt dementsprechend eine Ausführungsform eines Flurförderzeugs 60 mit einem Fahrzeugkörper 60a, an welchem zwei Lasträder 61a in identischer Weise einander in Fahrzeugbreitenrichtung gegenüberliegend einzeln aufgehängt sind. Die Lasträder 61a sind hierbei, wie durch jeweilige Doppelpfeile angedeutet, gegenüber dem Fahrzeugkörper 60a in Höhenrichtung relativ verlagerbar, wodurch die ebenfalls durch einen Doppelpfeil angedeutete Schwenkbewegung des Fahrzeugkörpers 60a gegenüber dem Untergrund U ausgelöst werden kann. Hierzu sind die beiden Lasträder 61a jeweils auf einer Flanschplatte 62 getragen, welche über einen Aktor 63 und ein Dämpfungselement 64 an einem entsprechenden, dem Fahrzeugkörper 60a zugeordneten Gegenstück 65 befestigt sind. Durch eine asynchrone Ansteuerung der beiden Aktoren 63 kann somit das oben angesprochene Neigen des Fahrzeugkörpers 60a gegenüber dem Untergrund U erzielt werden.

In der Ausführungsvariante eines Flurförderzeugs 70 aus Figur 4B sind im Gegensatz zu der Ausführungsvariante aus Figur 4A die Aktoren 73 und Dämpfungselemente 74 jeweils in einer Ansicht entlang der Höhenrichtung (z-Richtung) innerhalb der Kontur der Radkörper 71a aufgenommen, indem die Flanschplatten 72 die Radkörper jeweils in Breitenrichtung des Fahrzeugs 70 nach außen abschließen. Hierdurch wird bei gleicher Funktion verglichen mit der Ausführungsform aus Figur 4A deutlich Bauraum eingespart.

Drei Varianten der im Zusammenhang mit der Figur 4B diskutierten Einzelradaufhängung sind nun in Figuren 4C bis 4E gezeigt. Hierbei ist in der Figur 4C ein Lastrad 81a mittels eines Radlagers 82 rotierbar getragen, welches Radlager 82 mittels eines Aktors 83 und ggf. eines nicht dargestellten Dämpfungselements an einem Fixpunkt 85 an einem Gegenelement dem nicht dargestellten Fahrzeugkörper zugeordnet ist.

Im Gegensatz hierzu wird in der Ausführungsform aus Figur 4D auf das Radlager verzichtet und es kommt zum rotierbaren Tragen des Lastrads 91a lediglich ein an einer kreisrunden Linearführung 92a eingreifender Führungswagen 92b zum Einsatz, welcher jedoch in analoger Weise über einen Aktor 93 und ggf. ein Dämpfungselement an einem Fixpunkt 95 dem nicht dargestellten Fahrzeugrahmen zugeordnet ist.

Zuletzt zeigt die Figur 4E eine weitere Variante einer Einzelradaufhängung, in welcher ein Lastrad 101a ebenfalls mittels einer Linearführung 102a rotierbar getragen ist, wobei diese jedoch einem Hebelelement 103 zugeordnet ist, welches wiederum schwenkbar an einem Fixpunkt 105 an dem nicht dargestellten Fahrzeugrahmen gelagert ist, wobei der Fixpunkt 105 gegenüber dem Drehzentrum 106 des Lastrads 101a versetzt ist. Indem nun ein nicht gezeigter Aktor dazu eingerichtet ist, eine Schwenkbewegung des Hebelelements 103 hervorzurufen, kann durch den Versatz des Fixpunkts 106 von dem Drehzentrum 105 ebenfalls eine relative Verlagerung zwischen Lastrad 101a und dem nicht dargestellten Fahrzeugkörper in Höhenrichtung mit einem weiteren Beitrag in Längsrichtung des Fahrzeugs erzielt werden.

Zuletzt zeigt Figur 5 nun ein schematisches Funktionsdiagramm von funktionellen Komponenten eines erfindungsgemäßen Flurförderzeugs, wie sie mit jeder der eben diskutierten Ausführungsformen von Lastradanordnungen eingesetzt werden können. Insbesondere zeigt Figur 5 einen der angesprochenen Aktoren, beispielsweise den Aktor 13 aus Figur 1A, den Aktor 23 aus Figur 1B, etc., wobei aus Gründen der Lesbarkeit im Folgenden jeweils lediglich der Aktor 13 genannt werden wird.

Wie angesprochen, ist dieser Aktor 13 dazu eingerichtet, eine relative Position eines Lastrads bezüglich des Fahrzeugkörpers in einem erfindungsgemäßen Flurförderzeug anzupassen. Weiterhin umfasst die Anordnung aus Figur 5 eine Erfassungseinheit 110, welche dazu eingerichtet ist, einen momentanen Betriebsparameter des Flurförderzeugs zu erfassen und entsprechende Daten auszugeben. Diese Daten werden an eine Steuereinheit 112 mit einer zugeordneten Speichereinheit 114 weitergegeben, welche mit dem Aktor 13 betriebsmäßig gekoppelt ist. Die Steuereinheit 112 und auch die Speichereinheit 114 können hierbei von beliebigen bekannten Typen sein und beispielsweise mit einer zentralen Steuerung des entsprechenden Flurförderzeugs betriebsmäßig gekoppelt oder darin integriert sein.

Ferner kann auch noch wenigstens eine weitere Erfassungseinheit 110a in dem Fahrzeug bereitgestellt sein, welche wenigstens eine Eigenschaft der Umgebung des Fahrzeugs erfasst und entsprechende Daten an die Steuereinheit 112 ausgibt. Alternativ oder zusätzlich kann in dem Fahrzeug ein Empfangsgerät 110b vorgesehen sein, welches dazu eingerichtet ist, von einer externen Einrichtung Daten zu empfangen, welche Informationen über die Position oder die Umgebung des Flurförderzeugs repräsentieren.

Hierbei ist die Steuereinheit 112 dazu eingerichtet, einen Sollzustand S des Flurförderzeugs zu definieren, Daten von der Erfassungseinheit 110 zu erhalten, anhand der erfassten Betriebsparameter des Flurförderzeugs einen Istzustand Z des Flurförderzeugs zu bestimmen, Auswirkungen möglicher Anpassungen der relativen Position des Lastrads 11a bezüglich des Fahrzeugkörpers 10a auf den Istzustand Z des Flurförderzeugs zu berechnen und daraufhin den Aktor 13 derart anzuweisen, dass durch eine Anpassung der relativen Position des Lastrads 11a bezüglich des Fahrzeugkörpers 10a eine Annäherung des Istzustands Z des Flurförderzeugs zu einem Sollzustand S bewirkt wird.

## Patentansprüche

1. Flurförderzeug (10), insbesondere Schmalgang-Stapler, umfassend:
- einen Fahrzeugkörper (10a);
- ein Hubgerüst, welches sich von dem Fahrzeugkörper (10a) im Wesentlichen vertikal erstreckt;
- wenigstens ein Lastrad (11a), welches auf einem Untergrund (U) aufsteht;
- wenigstens ein weiteres Rad, welches ebenfalls auf dem Untergrund aufsteht, beispielsweise ein gelenktes Antriebsrad (16), welches dazu eingerichtet ist, das Flurförderzeug (10) in einer gelenkten Weise zu einer Bewegung auf dem Untergrund (U) anzutreiben;
- wenigstens einen dem wenigstens einen Lastrad (11a) zugeordneten Aktor (13), welcher dazu eingerichtet und angeordnet ist, eine relative Position des Lastrads (11a) bezüglich des Fahrzeugkörpers (10a) anzupassen;
- wenigstens eine Erfassungseinheit (110), welche dazu eingerichtet ist, einen momentanen Betriebsparameter des Flurförderzeugs (10) zu erfassen und entsprechende Daten auszugeben; und
- eine Steuereinheit (112) mit einer zugeordneten Speichereinheit (114), welche betriebsmäßig mit dem wenigstens einen Aktor (13) und der wenigstens einen Erfassungseinheit (110) gekoppelt und dazu eingerichtet ist:
∘ einen Soll-Zustand (S) des Flurförderzeugs (10) zu definieren;
∘ Daten von der Erfassungseinheit (110) zu erhalten;
∘ anhand der erfassten Betriebsparameter des Flurförderzeugs (10) einen Ist-Zustand (Z) des Flurförderzeugs (10) zu bestimmen;
∘ Auswirkungen möglicher Anpassungen der relativen Position des Lastrads (11a) bezüglich des Fahrzeugkörpers (10a) auf den Ist-Zustand (Z) des Flurförderzeugs (10) zu berechnen; und
∘ den wenigstens einen Aktor (13) derart anzuweisen, dass durch eine Anpassung der relativen Position des Lastrads (11a) bezüglich des Fahrzeugkörpers (10a) eine Annäherung des Ist-Zustands (Z) des Flurförderzeugs (10) an den Soll-Zustand (S) bewirkt wird,
**dadurch gekennzeichnet, dass** das wenigstens eine Lastrad (51a) einem schwenkbar an dem Fahrzeugkörper (50b) angelenkten Rahmenelement (50a) zugeordnet ist.

2. Flurförderzeug (10), insbesondere Schmalgang-Stapler, umfassend:
- einen Fahrzeugkörper (10a);
- ein Hubgerüst, welches sich von dem Fahrzeugkörper (10a) im Wesentlichen vertikal erstreckt;
- wenigstens ein Lastrad (11a), welches auf einem Untergrund (U) aufsteht;
- wenigstens ein weiteres Rad, welches ebenfalls auf dem Untergrund aufsteht, beispielsweise ein gelenktes Antriebsrad (16), welches dazu eingerichtet ist, das Flurförderzeug (10) in einer gelenkten Weise zu einer Bewegung auf dem Untergrund (U) anzutreiben;
- wenigstens einen dem wenigstens einen Lastrad (11a) zugeordneten Aktor (13), welcher dazu eingerichtet und angeordnet ist, eine relative Position des Lastrads (11a) bezüglich des Fahrzeugkörpers (10a) anzupassen;
- wenigstens eine Erfassungseinheit (110), welche dazu eingerichtet ist, einen momentanen Betriebsparameter des Flurförderzeugs (10) zu erfassen und entsprechende Daten auszugeben; und
- eine Steuereinheit (112) mit einer zugeordneten Speichereinheit (114), welche betriebsmäßig mit dem wenigstens einen Aktor (13) und der wenigstens einen Erfassungseinheit (110) gekoppelt und dazu eingerichtet ist:
∘ einen Soll-Zustand (S) des Flurförderzeugs (10) zu definieren;
∘ Daten von der Erfassungseinheit (110) zu erhalten;
∘ anhand der erfassten Betriebsparameter des Flurförderzeugs (10) einen Ist-Zustand (Z) des Flurförderzeugs (10) zu bestimmen;
∘ Auswirkungen möglicher Anpassungen der relativen Position des Lastrads (11a) bezüglich des Fahrzeugkörpers (10a) auf den Ist-Zustand (Z) des Flurförderzeugs (10) zu berechnen; und
∘ den wenigstens einen Aktor (13) derart anzuweisen, dass durch eine Anpassung der relativen Position des Lastrads (11a) bezüglich des Fahrzeugkörpers (10a) eine Annäherung des Ist-Zustands (Z) des Flurförderzeugs (10) an den Soll-Zustand (S) bewirkt wird,
**dadurch gekennzeichnet, dass** das oder wenigstens eines der Lasträder (61a), vorzugsweise sämtliche der Lasträder (61a), einzeln an dem Fahrzeugrahmen (60a) in einer durch wenigstens einen Aktor (63) in vertikaler Richtung (z) linear verlagerbaren Weise angeordnet ist, wobei ggf. ferner ein Dämpfungselement (64) zum Dämpfen der Linearbewegung und/oder für einen Lastausgleich vorgesehen ist.

3. Flurförderzeug (10) nach Anspruch 1 oder 2, wobei die wenigstens eine Erfassungseinheit (110) dazu eingerichtet ist, wenigstens Eines zu erfassen aus:
- einer Neigung des Fahrzeugkörpers (10a) gegenüber dem Untergrund (U) und/oder der Horizontalen; und
- einer Beschleunigung und/oder Geschwindigkeit und/oder Neigung wenigstens einer Komponente des Flurförderzeugs (10) und/oder einer von dem Flurförderzeug (10) getragenen Last gegenüber dem Untergrund (U) und/oder wenigstens einer anderen Komponente des Flurförderzeugs (10), wobei die zu erfassende Beschleunigung insbesondere quer zu einer Fahrtrichtung des Flurförderzeugs (10) gerichtet sein kann.

4. Flurförderzeug (10) nach einem der vorhergehenden Ansprüche, ferner umfassend wenigstens eine weitere Erfassungseinheit (110a), welche dazu eingerichtet ist, wenigstens eine Eigenschaft der Umgebung des Flurförderzeugs (10) zu erfassen und entsprechende Daten an die Steuereinheit (112) auszugeben.

5. Flurförderzeug (10) nach einem der vorhergehenden Ansprüche, wobei die oder wenigstens eine der Erfassungseinheiten (110, 110a) dem oder wenigstens einem der Lasträder (11a) zugeordnet ist.

6. Flurförderzeug (10) nach einem der vorhergehenden Ansprüche, wobei die oder wenigstens eine der Erfassungseinheiten (110, 110a) dem Fahrzeugkörper (10a), dem Hubgerüst und/oder einer mit dem Fahrzeugkörper (10a) oder dem Hubgerüst verbundenen Komponente des Flurförderzeugs (10) zugeordnet ist.

7. Flurförderzeug (10) nach einem der vorhergehenden Ansprüche, wobei in der Speichereinheit (114) der Steuereinheit (112) wenigstens ein räumliches Kennfeld hinterlegt ist, wobei die Steuereinheit (112) dazu eingerichtet ist, anhand momentaner Bewegungsparameter des Flurförderzeugs (10) und des wenigstens einen Kennfelds eine bevorstehende Änderung des Ist-Zustands des Flurförderzeugs (10) zu bestimmen.

8. Flurförderzeug (10) nach einem der vorhergehenden Ansprüche, ferner umfassend wenigstens ein Empfangsgerät (110b), welches dazu eingerichtet ist, von einer externen Einrichtung Daten zu empfangen, welche Informationen über die Position oder die Umgebung des Flurförderzeugs (10) repräsentieren.

9. Flurförderzeug (70) nach einem der Ansprüche 2 bis 8,
wobei der wenigstens eine Aktor (73) und ggf. das wenigstens eine Dämpfungselement (74) wenigstens abschnittsweise innerhalb der Kontur des Lastrads (71a) angeordnet ist.

10. Flurförderzeug nach Anspruch 9,
wobei in einer Radfelge des Lastrads (91a) eine kreisrunde Linearführung (92a) vorgesehen ist, mit welcher ein Führungswagen (92b) verbunden ist, wobei der wenigstens eine Aktor (93) und ggf. das wenigstens eine Dämpfungselement zwischen dem Fahrzeugkörper und dem Führungswagen (92b) angeordnet sind.

11. Flurförderzeug nach Anspruch 9,
wobei in einer Radfelge des Lastrads (101a) eine kreisrunde Linearführung (102a) vorgesehen ist, mit welcher ein Führungswagen (102b) verbunden ist, welcher wiederum einem Hebelelement (103) zugeordnet ist, wobei das Hebelelement (103) andererseits derart schwenkbar an dem Fahrzeugkörper gelagert ist, dass seine Schwenkachse (105) und die Drehachse des Lastrads (106) nicht zusammenfallen, wobei der wenigstens eine Aktor dazu eingerichtet ist, eine Schwenkbewegung des Hebelelements (103) zu bewirken.
